# EUROPÄISCHE PATENTANMELDUNG

(11) **EP 0 563 725 A1**
(43) Veröffentlichungstag der Anmeldung: **06.10.1993**
(21) Anmeldenummer: 93104641.1
(22) Anmeldetag: 22.03.1993
(51) Int. Cl.: G02B 6/42

(54) **Verbindung einer Fotodiode mit einem Lichtwellenleiter**

(30) Priorität: 30.03.1992 DE 4210331
(71) Anmelder: Bodenseewerk Gerätetechnik GmbH, D-88662 Überlingen (DE)
(72) Erfinder: Quast, Thomas, W-7770 Überlingen (DE); Langner, Klaus, W-7770 Überlingen 14 (DE)
(74) Vertreter: Weisse, Jürgen, Dipl.-Phys. Patentanwalt

(57) **Zusammenfassung**

Die Erfindung betrifft die Verbindung einer Fotodiode (5) mit einem Lichtwellenleiter (4), bei der der Lichtwellenleiter (4) und/oder ein diesen umgebens Kapillarröhrchen (3) in einem Winkel angeschliffen ist, der nicht senkrecht sondern um etwa 12° geneigt zur Normalen der Längsachse des Lichtwellenleiters (4) verläuft. Auf dieser Anschliff-Fläche (42) ist eine Fotodiode (5) angeordnet. Hierdurch wird vermieden, dass im Lichtwellenleiter (4) herangeführtes Licht durch die Anschliff-Fläche (42) und/oder eine teilreflektierende Fläche der Fotodiode (5) in den Lichtwellenleiter (4) zurück reflektiert wird.

## Beschreibung

### Technisches Gebiet

Die Erfindung betrifft die Verbindung einer Fotodiode mit einem Lichtwellenleiter, der eine Wellenleiter-Längsachse und eine Stirnfläche aufweist, wobei die Photodiode dieser Stirnfläche Zugewandt ist, so daß durcn den Wellenleiter laufendes Licht auf die Photodiode geleitet wird, und wobei die Photodiode eine teilweise reflektierende Eintrittsfläche aufweist, durch welche hindurch die Photodiode von dem Licht beaufschlagt ist.

### Zugrundeliegender Stand der Technik

Senkrecht zur Längsachse des Lichtwellenleiters, also in der Normalen der Längsachse verlaufende Endflächen des Lichtwellenleiters bzw. teilreflektierende Fläche der Fotodiode, rufen in einem erheblichen Umfang Reflexionen innerhalb des Lichtwellenleiters hervor. Der gesamte reflektierte Anteil kann mehr als 4% betragen und da Halbleiterlaser auf das reflektierte Licht äusserst empfindlich reagieren, führt dies zu Störungen. Man hat bereits versucht, diese Störungen durch Isolation oder Dämpfung zu unterdrücken, wobei jedoch ein erheblicher Aufwand oder ein empfindlicher Verlust an Signalintensität inkauf genommen werden müssen.

Es sind Anordnungen bekannt, bei denen ein Lichtbündel von einer Laserdiode über die Stirnfläche einer lichtleitenden Faser in diese Faser eingekoppelt wird und bei denen diese Stirnfläche geneigt zu der Bündelachse und der damit fluchtenden Faserachse angeordnet ist (DE-A-3 932 579; DE-A-2 916 958, Fig.2; US-A-5 074 682). Bei anderen bekannten Ausführungen ist die Stirnfläche der lichtleitenden Faser senkrecht zur Faserachse angeordnet, aber die Faserachse bildet mit der Bündelachse einen Winkel (DE-A-2 916 958).

### Offenbarung der Erfindung

Der Erfindung liegt die Aufgabe zugrunde, eine Verbindung einer Fotodiode mit einem Lichtwellenleiter zu schaffen, bei der Reflexionen in Richtung der Achse des Lichtwellenleiters stark unterdrückt werden, ohne dass weitere Entkoppelungsmaßnahmen erforderlich wären, die einen erheblichen Aufwand oder Verlust an Signalintensität zur Folge hätten, und die sich besonders einfach und kostensparend herstellen lässt.

Der Erfindung liegt weiter die Aufgabe zugrunde, eine reflexarme Verbindung einer Fotodiode mit einem Lichtleiter unter Verwendung mikromechanischer Techniken rationell herzustellen.

Erfindungsgemäss werden diese Aufgaben dadurch gelöst, daß
- die Stirnfläche mit einer zu der Wellenleiter-Längsachse senkrechten Evbene einen Winkel bildet und
- die Eintrittsfläche der Photodiode im wesentlichen parallel zu dieser Stirnfläche ist.

Durch diese Ausbildung kann es vermieden werden, dass an der Anschliff-Fläche bzw. der teilreflektierenden Fläche der Fotodiode auftretende Reflexe derart in den Lichtwellenleiter eingeleitet werden, dass sie sich in diesem fortsetzen können.

Zum Erzielen grösstmöglicher Empfindlichkeit ist es zweckmässig, die Fotodiode in bezug auf die Längsache des Lichtwellenleiters zentriert anzuordnen. Bei dem Lichtwellenleiter kann es sich um eine Monomode-Glasfaser handeln, die in ihrem Endbereich in ein Kapillarröhrchen eingebettet sein kann. Die Fotodiode kann in einem Abstand von vorzugsweise etwa 100 µm von der Endfläche des Lichtwellenleiters entfernt oder nahezu unmittelbar auf der Endfläche des Lichtwellenleiters angeordnet sein.

Vorzugsweise ist die Endfläche des Lichtwellenleiters und/oder die teilreflektierende Fläche der Fotodiode gegen die Normale der Längsachse des Lichtwellenleiters um einen Winkel geneigt der grösser ist als der Akzeptanzwinkel des Lichtwellenleiters. Vorzugsweise beträgt diese Neigung etwa 12°.

Bei der Fotodiode kann es sich um eine fertig konfektionierte Fotodiode oder um eine gebondete Chipdiode handeln. Die Fotodiode kann unmittelbar örtlich beschaltet sein und die Fotodiode kann mit dem Lichtwellenleiter und gegebenenfalls dem Kapillarröhrchen mittels eines optisch transparenten, im Brechungsindex dem Lichtwellenleiter angepassten Klebers verbunden sein. Der Kleber ist vorzugsweise ein UV-Kleber.

Bei einer bevorzugten Ausführungsform können der Lichtwellenleiter, gegebenenfalls das Kapillarröhrchen, die Fotodiode und gegebenenfalls deren Beschaltung, auf deren Träger durch einen Kleber oder durch Löten mit einem niedrigschmelzenden Lot befestigt sein, wodurch ein besonders einfacher und dennoch haltbarer Aufbau der Verbindung erzielt wird.

Ein besonders vorteilhaftes Verfahren zur Herstellung einer Verbindung der vorstehend beschriebenen Art umfaßt die Verfahrensschritte:
(a) Herstellen von streifenförmigen Trägermaterialscheiben mit Stirnflächen, schmalen Längsseitenflächen und streifenförmigen, parallelen Oberflächen, bei in einer der Oberflächen eine in Längsrichtung verlaufende v-förmige Grube gebildet ist,
(b) Stapeln der Trägermaterialscheiben aufeinander mit gegeneinander in Längsrichtung versetzten Stirnflächen und Fixieren der Trägermaterialscheiben in dieser Lage,
(c) Gemeinsames Anschleifen und Polieren der versetzten Stirnflächen auf einer Seite der gestapelten Trägermaterialscheiben in einer Ebene, die mit den Ebenen der Oberflächen einen Winkel bildet,
(d) Aufsetzen von Fotodioden-Chips mit einer Eintrittsfläche auf die so angeschliffenen und polierten Stirnflächen,
(e) Herstellen von lichtleitenden Fasern mit abgeschrägten Stirnflächen, und
(f) Einlegen dieser Fasern in die v-förmigen Gruben und Fixieren der Fasern darin mit einer solchen Orientierung, um die Längsachse der Fasern, daß die abgeschrägten Stirnflächen der Fasern nach den Eintrittsflächen der jeweiligen Fotodioden-Chips ausgerichtet sind.

### Kurze Beschreibung der Zeichnung

- Fig.1: stellt in schematischer vereinfachter Darstellung, eine Ausführungsform einer Verbindung einer Fotodiode mit einem Lichtwellenleiter dar.
- Fig.2: zeigt eine Draufsicht auf eine streifenförmige Trägermaterialscheibe, die bei der Herstellung einer Verbindung einer Fotodiode mit einem Lichtwellenleiter in Form einer lichtleitenden Faser verwendet wird.
- Fig.3: ist eine zugehörige Seitenansicht.
- Fig.4: ist eine Ansicht der Trägermaterialscheibe von links in Fig.3 gesehen mit einer eingelegten Glasfaser.
- Fig.5: zeigt in vergrößertem Maßstab die Anordnung eines Fotodioden-Chips vor der abgeschrägten Stirnfläche der Trägermaterialscheibe.
- Fig.6: zeigt in vergrößertem Maßstab das Ende der Trägermaterialscheibe mit der abgeschrägten Stirnfläche, dem Fotodioden-Chip und der in eine Grube der streifenförmigen Trägermaterialscheibe eingelegten lichtleitenden Faser.
- Fig.7: zeigt eine Siliziumscheibe (Wafer) aus welchem die streifenförmigen Trägermaterialscheiben hergestellt werden, und veranschaulicht Verfahrensschrittte bei der Herstellung der Verbindung.
- Fig.8: veranschaulicht einen weiteren Verfahrensschritt bei der Herstellung der Verbindung zwischen Fotodioden-Chip und lichtleitender Faser.

### Bevorzugte Ausführungen der Erfindung

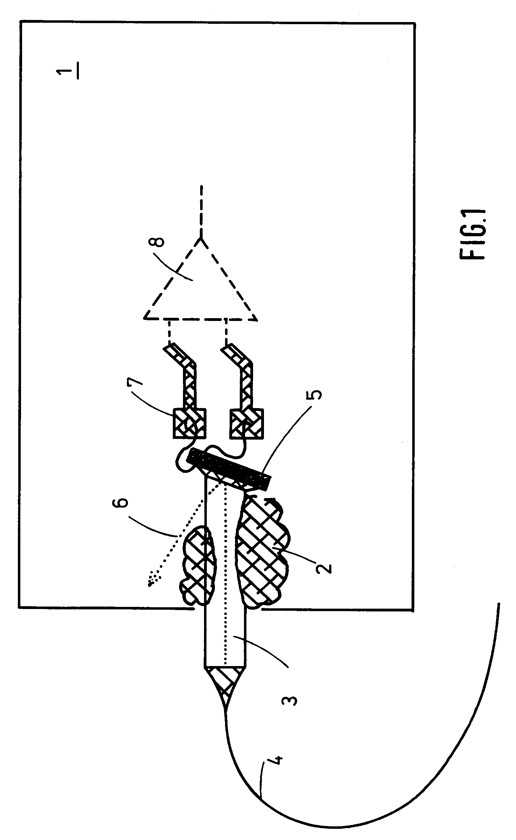

In Fig.1 ist mit 1 ein Träger, beispielsweise eine Trägerplatte bezeichnet, auf der mittels Klebstoff 2 ein Kapillarröhrchen 3 befestigt ist. Innerhalb des Kapillarröhrchens befindet sich eine Monomode-Glasfaser 4. Der Verlauf der Glasfaser 4 innerhalb des Kapillarröhrchens 3 ist punktiert dargestellt. Die Glasfaser 4 ist innerhalb des Kapillarröhrchens 3 vorzugsweise durch einen Kleber fixiert. Das freie Ende des Kapillarröhrchens 3 und der darin befindlichen Glasfaser 4 sind angeschliffen und optisch feinpoliert, so dass sich eine Anschliff-Fläche ergibt, die nicht senkrecht zur Längsachse der Glasfaser 4 und des Kapillarröhrchens 3 verläuft sondern in einem Winkel von etwa 12° dazu.

Auf der Anschliff-Fläche ist eine Fotodioden-Chip 5 durch Kleben befestigt. Zum Kleben wird ein optisch transparenter, im Brechungsindex an den Faserkern angepasster UV-Kleber verwendet.

Diese Anordnung hat zur Folge, dass durch die Glasfaser 4 herangeführtes Licht, das an der Anschliff-Fläche der Glasfaser und/oder der teilreflektierenden Oberfläche der Fotodiode reflektiert wird, nicht in die Glasfaser 4 zurück verläuft und dort durch Totalreflexion fortgeführt wird, sondern in Richtung des Pfeiles 6 aus der Verbindungsanordnung austritt.

Mit 7 sind Anschlussorgane für die Fotodiode bezeichnet und mit 8 ein Bauteil, zu deren örtlicher Beschaltung.

Die erzielbare Rückflußdämpfung liegt bei wenigstens 60 dB.

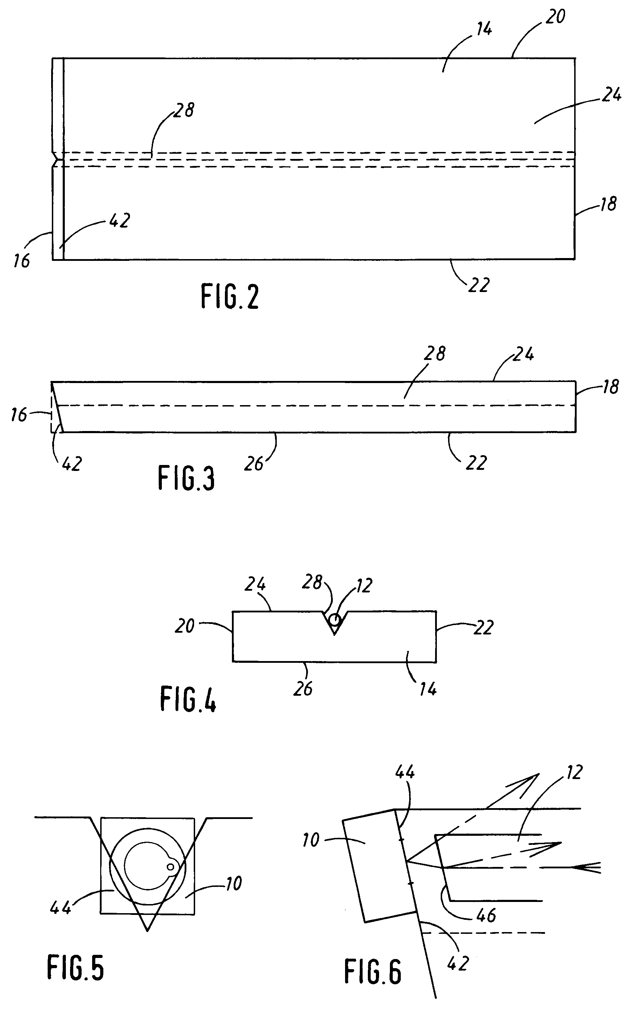

Fig.2 bis 6 zeigen eine andere Ausführung der Verbindung zwischen einem Fotodioden-Chip 10 und einer lichtleitenden Faser 12 dargestellt. Die Figuren 2 bis 6 veranschaulichen auch ein besonders vorteilhaftes Verfahren zur Herstellung einer solchen Verbindung.

Mit 14 ist eine streifenförmige Trägermaterialscheibe bezeichnet. Die Trägermaterialscheibe 14 besteht aus Silizium. Die Trägermaterialscheibe 14 weist im Ausgangszustand parallele Stirnflächen 16 und 18, schmale Längsseitenflächen 20 und 22 und streifenförmige Oberflächen 24 und 26 auf. Die streifenförmige Trägermaterialscheibe 14 definiert eine Längsrichtung parallel zu den schmalen Längsseitenflächen 20 und 22. In der in den Figuren oberen Oberfläche 24 ist eine in dieser Längsrichtung verlaufende v-förmige Grube 26 gebildet.

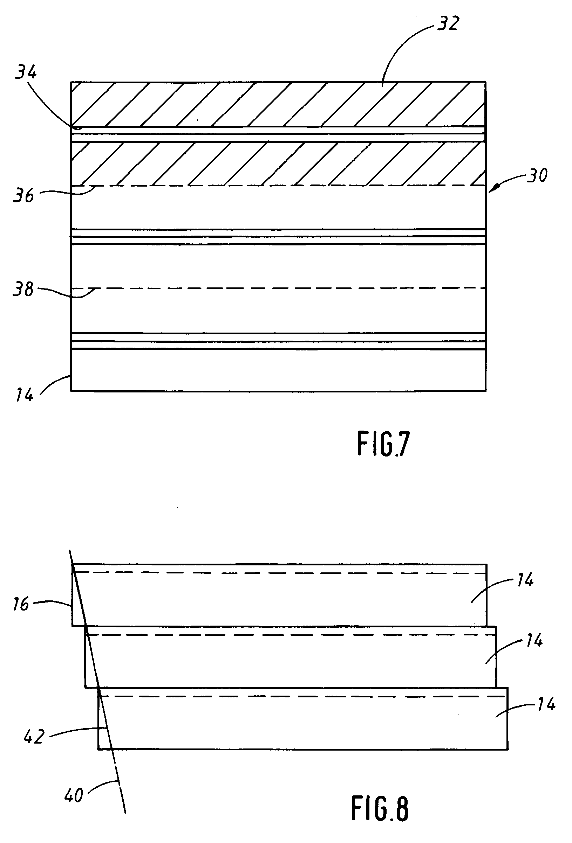

Die Trägermaterialscheibe 14 wird aus einer Siliziumscheibe 30 (Fig.7), einem sog. Wafer, hergestellt. Eine solche Siliziumscheibe 30 ist mit einer Maske 32 versehen, die im oberen Teil von Fig.7 schraffiert dargestellt ist.

Diese Maske 32 läßt eine Mehrzahl von parallelen Streifen 34 frei. Dort werden mittels anisotroper Ätzung die v-förmigen Gruben 26 eingeätzt. Die Maske 32 wird dann entfernt. Die Siliziumscheibe 30 wird dann durch Anritzen entlang der Kristallkanten 36, 38 in die streifenförmigen Trägermaterialscheiben 14 unterteilt.

Die so gebildeten streifenförmigen Trägermaterialscheiben 14 werden dann so aufeinandergestapelt, daß die Stirnflächen 16 längs einer Ebene 40 in Längsrichtung gegeneinander versetzt sind. Die Ebene 40 bildet mit den Stirnflächen 16 einen Winkel von 12°. In dieser Position werden die Trägermaterialscheiben 14 fixiert. Die Stirnflächen 16 werden dann angeschliffen, so daß eine in der Ebene 40 liegende Anschliff-Flächen gebildet werden.

Die Trägermaterialscheiben 14 werden dann wieder getrennt. Auf die Anschliff-Fläche jeder der Trägermaterialscheiben 14 wird ein Fotodioden-Chip 10 mit einer Eintrittsfläche 44 aufgesetzt und durch Löten fixiert. Die Kontaktierung erfolgt durch Bonden.

Die Stirnfläche 46 der Faser 12 ist ebenfalls unter 12° abgeschnitten. Das kann mittels entsprechender "Fibercleaver" geschehen. Die Faser 12 wird dann in die v-förmige Grube 28 eingelegt und um die Faserachse so lange gedreht, bis die Stirnfläche der Faser 12 parallel zu der Anschliff-Fläche 42 und der Eintrittsfläche 44 ist. Wie aus Fig.6 ersichtlich ist, liegt die Stirnfläche 46 dabei in einem gewissen Abstand von der Eintrittsfläche 44. Wie aus Fig.6 ebenfalls ersichtlich ist, wird das an der Eintrittsfläche des Fotodioden-Chips 10 reflektierte Licht nicht wieder von der Faser 12 erfaßt. Auch der Reflex an der Stirnfläche 46 der Faser 12 wird zur Seite ausgespiegelt.

Die Faser 12 wird dann in der v-förmigen Grube 28 mittels eines durch UV-Bestrahlung erhärtbaren Kleber fixiert.

Es ergibt sich einew weitgehende Reflexionsfreiheit. In Versuchen mit einem Spektralreflektometer konnte eine Reflexionsunterdrückung bis zu 80 dB gemessen werden.

## Patentansprüche

1. Verbindung einer Fotodiode (5;10) mit einem Lichtwellenleiter (4;12), der eine Wellenleiter-Längsachse und und eine Stirnfläche (42) aufweist, wobei die Photodiode (5;10) dieser Stirnfläche (42) zugewandt ist, so daß durch den Lichtwellenleiter (4,12)) laufendes Licht auf die Photodiode (5;10) geleitet wird, und wobei die Photodiode (5;10) eine teilweise reflektierende Eintrittsfläche (44) aufweist, durch welche hindurch die Photodiode (5) von dem Licht beaufschlagt ist, dadurch gekennzeichnet, daß
- die Stirnfläche (42) mit einer zu der Wellenleiter-Längsachse senkrechten Ebene einen Winkel bildet und
- die Eintrittsfläche (44) der Photodiode (5;10) im wesentlichen parallel zu dieser Stirnfläche ist.

2. Verbindung nach Anspruch 1, dadurch gekennzeichnet, daß die Stirnfläche (42) des Lichtwellenleiters (4);12) angeschliffen ist.

3. Verbindung nach Anspruch 1, **dadurch gekennzeichnet, dass** die Fotodiode (5) in bezug auf die Längsachse des Lichtwellenleiters (4) zentriert ist.

4. Verbindung nach Anspruch 1 und/oder 2, **dadurch gekennzeichnet, dass** der Lichtwellenleiter (4) eine Monomode-Glasfaser ist.

5. Verbindung nach Anspruch 1 und/oder 2, **dadurch gekennzeichnet, daß** der Lichtwellenleiter (4) eine Multimode-Glasfaser ist.

6. Verbindung nach einem oder mehreren der Ansprüche 1 bis 5, **dadurch gekennzeichnet, dass** der Lichtwellenleiter (4) in ein Kapillarröhrchen (3) eingebettet ist.

7. Verbindung nach einem oder mehreren der Ansprüche 1 bis 6, **dadurch gekennzeichnet, dass** die Fotodiode (5) in einem Abstand von der Endfläche des Lichtwellenleiters (4) angeordnet ist.

8. Verbindung nach Anspruch 7, **dadurch gekennzeichnet, dass** der Abstand etwa 1 µm beträgt, wenn der Spalt brechungsindexangepaßt gefüllt ist.

9. Verbindung nach Anspruch 7, **dadurch gekennzeichnet, daß** der Abstand > 100 µm ist, wenn der Spalt gasgefüllt ist.

10. Verbindung nach einem oder mehreren der Ansprüche 1 bis 4, **dadurch gekennzeichnet, dass** die Fotodiode (5) unmittelbar auf der Endfläche des Lichtwellenleiters (4) angeordnet ist.

11. Verbindung nach einem oder mehreren der Ansprüche 1 bis 8, **dadurch gekennzeichnet, dass** die Endfläche des Lichtwellenleiters (4) und/oder die teilreflektierende Fläche der Fotodiode (5) gegen die Normale zur Längsachse des Lichtwellenleiters (4) um einen Winkel geneigt ist, der grösser ist als der Akzeptanzwinkel des Lichtwellenleiters (4).

12. Verbindung nach einem oder mehreren der Ansprüche 1 bis 11, **dadurch gekennzeichnet, dass** die Endfläche des Lichtwellenleiters (4) und/oder die teilreflektierende Fläche der Fotodiode (5) gegen die Normale zur Längsachse des Lichtwellenleiters (4) um etwa 12° geneigt sind.

13. Verbindung nach einem oder mehreren der Ansprüche 1 bis 12, **dadurch gekennzeichnet, dass** die Fotodiode (5) eine fertig konfektionierte Fotodiode ist.

14. Verbindung nach einem oder mehreren der Ansprüche 1 bis 12, **dadurch gekennzeichnet, dass** die Fotodiode (5) eine gebondete Chipdiode ist.

15. Verbindung nach einem oder mehreren der Ansprüche 1 bis 12, **dadurch gekennzeichnet, dass** die Fotodiode (5) örtlich beschaltet ist.

16. Verbindung nach einem oder mehreren der Ansprüche 1 bis 12, **dadurch gekennzeichnet, daß** die Fotodiode mit dem Lichtwellenleiter (4) und gegebenenfalls dem Kapillarröhrchen (3) mittels eines optisch transparenten Glases verbunden ist.

17. Verbindung nach einem oder mehreren der Ansprüche 1 bis 16, **dadurch gekennzeichnet, dass** die Fotodiode (5) mit dem Lichtwellenleiter (4) und gegebenenfalls dem Kapillarröhrchen (3) mittels eines optisch transparenten, im Brechungsindex dem Lichtwellenleiter (4) angepassten Klebers verbunden ist.

18. Verbindung nach Anspruch 17, **dadurch gekennzeichnet, dass** der Kleber ein UV-Kleber ist.

19. Verbindung nach einem oder mehreren der Ansprüche 1 bis 15, **dadurch gekennzeichnet, dass** der Lichtwellenleiter (4) und gegebenenfalls das Kapillarröhrchen (3), die Fotodiode (5) und gegebenenfalls deren Beschaltung (8) auf einem Träger (1) durch Kleben befestigt sind.

20. Verbindung nach einem oder mehreren der Ansprüche 1 bis 16, **dadurch gekennzeichnet, daß** der Lichtwellenleiter (4) und gegebenenfalls das Kapillarröhrchen (3), die Fotodiode (5) und gegebenenfalls deren Beschaltung (8) auf einem Träger durch Löten mit niedrig schmelzendem Lot befestigt sind.

21. Verbindung nach Anspruch 1, **dadurch gekennzeichnet. daß**
(a) der Lichtwellenleiter eine Faser mit einer schräg zur Längsachse des Lichtwellenleiters verlaufenden Stirnfläche ist, die in einer v-förmigen Grube (28) einer streifenförmigen Trägermaterialscheibe angeordnet ist,
(b) die Stirnfläche (42) der streifenförmigen Trägermaterialscheibe (14) parallel zu der Stirnfläche der Faser angeschrägt ist und
(c) die Fotodiode mit einer Eintrittsfläche auf der Stirnfläche der streifenförmigen Trägermaterialscheibe sitzt.

22. Verfahren zur Herstellung einer Verbindung nach Anspruch 21, **gekennzeichnet durch die Verfahrensschritte:**
(a) Herstellen von streifenförmigen Trägermaterialscheiben mit Stirnflächen, schmalen Längsseitenflächen und streifenförmigen, parallelen Oberflächen, wobei in einer der Oberflächen eine in Längsrichtung verlaufende v-förmige Grube gebildet ist,
(b) Stapeln der Trägermaterialscheiben aufeinander mit gegeneinander in Längsrichtung versetzten Stirnflächen und Fixieren der Trägermaterialscheiben in dieser Lage,
(c) Gemeinsames Anschleifen und Polieren der versetzten Stirnflächen auf einer Seite der gestapelten Trägermaterialscheiben in einer Ebene, die mit den Ebenen der Oberflächen einen Winkel bildet,
(d) Aufsetzen von Fotodioden-Chips mit einer Eintrittsfläche auf die so angeschliffenen und polierten Stirnflächen,
(e) Herstellen von lichtleitenden Fasern mit abgeschrägten Stirnflächen, und
(f) Einlegen dieser Fasern in die v-förmigen Gruben und Fixieren der Fasern darin mit einer solchen Orientierung, um die Längsachse der Fasern, daß die abgeschrägten Stirnflächen der Fasern nach den Eintrittsflächen der jeweiligen Fotodioden-Chips ausgerichtet sind.

23. Verfahren nach Anspruch 22, **dadurch gekennzeichnet,** **daß** die Gruben durch anisotropes Ätzen in die Trägermaterialscheiben eingearbeitet sind.

24. Verfahren nach Anspruch 22, **dadurch gekennzeichnet, daß** als Trägermaterial Silizium verwendet wird.

25. Verfahren nach Anspruch 24, dadurch gekennzeichnet, daß
(a) in eine Siliziumscheibe durch anisotropes Ätzen eine Mehrzahl von Gruben parallel zu Kristallkanten eingearbeitet werden und
(b) anschließend die Siliziumscheibe durch Anritzen entlang solcher Kristallkanten die Siliziumscheibe in die Trägermaterialstreifen geteilt wird.

26. Verfahren nach Anspruch 22, **dadurch gekennzeichnet, daß** die Winkellage der Faser bezogen auf die Faserachse in der Grube an Hand von bilderkennenden Mitteln eingestellt wird.

27. Verfahren nach Anspruch 22, **dadurch gekennzeichnet, daß** die Faser in der v-förmigen Grube mittels eines durch UV-Bestrahlung aushärtbaren Klebers fixiert wird.
